# EUROPEAN PATENT APPLICATION

(11) **EP 4 848 714 A1**
(43) Date of publication of application: **02.12.2026**
(21) Application number: 25179915.1
(22) Date of filing: 30.05.2025
(51) Int. Cl.: H04N 19/132, H04N 19/186, H04N 19/59, H04N 19/60

(54) **METHOD OF VIDEO ENCODING, METHOD OF VIDEO DECODING AND SYSTEM**

(71) Applicant: NeuralAgent GmbH, 80807 München (DE)
(72) Inventor: Bhattacharyya, Indraditya, 81379 München (DE); Deniz, Onur, 82205 Gilching (DE)
(74) Representative: Epping - Hermann - Fischer

(57) **Abstract**

A method of video encoding is specified herein, comprising:
- receiving a video signal (S) wherein a frame (F) of the video signal (S) comprises a luminance frame (Y) and at least one chroma frame (U, V),
- compressing the luminance frame (Y) by block-wise Hadamard (Had) transforming and truncating the luminance frame (Y),
- compressing the at least one chroma frame (U, V) by sparse sampling of the at least one chroma frame (U, V), wherein a binary mask (BM) is applied to the at least one chroma frame (U, V),
- generating a compressed video signal by forming an output bitstream (O) comprising the compressed luminance frame (Y_{comp}) and the at least one compressed chroma frame (U_{comp}, V_{comp}).

Further, a method of video decoding and a system are specified herein.

## Description

A method of video encoding, a method for video decoding and a system for video encoding and/or video decoding are described herein.

Video encoding and video decoding methods can be used for compressing and subsequently reconstructing video signals, respectively, in order to reduce a bandwidth of the compressed video signal that is transmitted from the encoder to the decoder, while maintaining a high quality of the reconstructed video signal.

At least one object of certain embodiments is to provide a method of video encoding and a method of video decoding that allow for a reduction of a bitrate of a compressed video signal that is transmitted from the encoder to the decoder. At least one further object is to provide a system for video encoding and/or video decoding that allows for a reduction of a bitrate of a compressed video signal that is transmitted from the encoder to the decoder.

These objects are achieved by the methods and the system according to the independent claims. Further advantageous embodiments and further developments of the methods and the system are specified in the dependent claims.

According to an embodiment, the method of video encoding comprises a step of receiving a video signal wherein a frame of the video signal comprises a luminance frame and at least one chroma frame. For example, each frame comprises image information in the form of an array of pixel values. For example, the video signal comprises a temporal sequence of frames, wherein each frame comprises a luminance frame and two chroma frames. The luminance frame and the chroma frames can also be called luminance sub-frame and chroma sub-frames. In particular, the video signal is encoded in a YUV color model, wherein Y denotes the luminance or luma channel, whereas U and V denote two independent chroma channels. In particular, in the following the term "at least one chroma frame" refers to either the U chroma frame or the V chroma frame, or to both the U chroma frame and the V chroma frame.

For example, if the video signal is encoded in an RGB color model, wherein red, green and blue primary colors are additively combined, the method can comprise a preprocessing step. For example, the preprocessing step comprises converting the RGB color coded video signal into a YUV color coded video signal for further processing. It is also possible that a hardware-accelerated camera already natively outputs the video signal in a YUV420, YUV422, or YUV444 color format.

According to a further embodiment, the method of video encoding comprises a step of compressing the luminance frame by block-wise Hadamard transforming and truncating the luminance frame. For example, the luminance frame can be represented by a real-valued H×W matrix ${Y}_{t} ∈ {ℝ}^{H \times W}$, wherein H and W denote the height and width of the frame according to the respective number of pixels, and the numerical value of each matrix element specifies the luminance of a corresponding pixel. For example, for a frame with 1280×720 pixels, H is 1280 and W is 720.

For example, the luminance frame is partitioned into non-overlapping n×n blocks, where n is an integer, e.g. n is 2, 4, 6, 8, 10 or 12. In particular, the matrix Y*ₜ* representing the luminance frame is partitioned into non-overlapping 8×8 blocks *Bᵢⱼ.*

For example, each of these blocks is Hadamard transformed via *B'ᵢⱼ = H* × *Bᵢⱼ* × *H^{T},* where *H* is an n×n, e.g. 8×8, orthogonal Hadamard matrix satisfying *H^{T}* × *H = I.* Here, the superscript T denotes a transpose of the matrix, *I* denotes the identity matrix and the symbol × denotes a matrix multiplication. In particular, all matrix elements of the Hadamard matrix *H* are either +1 or -1. Alternatively, some or each of the blocks can be transformed using a discrete cosine transformation, DCT. Advantageously, the Hadamard transform is a computationally lightweight, orthogonal alternative to the DCT. In particular, the binary structure of the Hadamard matrix draws inspiration from Hadamard gates used in quantum computing. The Hadamard transformation enables fast spectral transformations suited for being executed on embedded devices.

In particular, each Hadamard transformed block is truncated and/or sparsified. For example, matrix elements with a value below a threshold value are set to zero and/or only matrix elements with the largest values are retained while others are set to zero. For example, the truncation is performed using a Top-K operation, where a number K of largest coefficients by absolute value in each Hadamard transformed block are retained, while the rest are zeroed, resulting in a sparsified frequency domain representation of the luminance frame.

According to a further embodiment, the method of video encoding comprises a step of compressing the at least one chroma frame by sparse sampling of the at least one chroma frame, wherein a binary mask is applied to the at least one chroma frame. For example, both the U chroma frame and the V chroma frame are compressed by sparse sampling, wherein a binary mask is applied to each chroma frame. The binary mask that is applied to the two chroma frames is preferably the same binary mask, although different binary masks can also be applied to the two chroma frames.

For example, the at least one chroma frame is downsampled before applying the binary mask. For example, the chroma frames U and V can be represented by real-valued H×W matrices that are downsampled to h×w matrices ${U}_{t} , {V}_{t} ∈ {ℝ}^{h \times w}$, wherein e.g. *h=H*/*4* and *w=W*/*4,* before further processing. For example, downsampling is performed by partitioning the chroma matrices into non-overlapping n×n blocks, e.g. 2×2, 4×4, or 6×6 blocks, and replacing each block by one matrix element that corresponds e.g. to a mean value of the corresponding block.

In particular, the binary mask can be represented by a H×W matrix, or by a h×w matrix in the downsampled case, wherein each matrix element is either zero or one. For example, the binary mask is a matrix *BM* ∈ {0,1}^{*h*×*w*}, wherein matrix elements that are 1 indicate sparse sampling locations of the chroma frame, whereas locations where the matrix elements are 0 are not sampled. For example, the binary mask is a content aware mask. For example, the content aware mask is derived from luminance gradients, e.g. via a Sobel operator, or a saliency map.

In particular, a sparsity level of the binary mask is defined as a ratio between the number of matrix elements of the binary mask that are equal to 1 and the total number of matrix elements of the binary mask. For example, the sparsity level is at most 0.05, or at most 0.03, or at most 0.01.

For example, the compressed, sparse sampled chroma frame is obtained by element-wise multiplication of the at least one downsampled chroma frame with the binary mask. In particular, each chroma frame is compressed and/or sparsified by element-wise multiplication with the binary mask. Preferably, the binary mask depends on the luminance frame, for example. In particular, the chroma frames can be sparse sampled at locations that are correlated with the luminance frame. For example, the chroma frames are sparse sampled at locations or regions where the luminance is high, low, and/or has a large gradient. For example, the binary mask exploits edges, gradients, and/or perceptual saliency of the luminance frame in order to preserve chroma information in visually important areas. In particular, the sparsified chroma frames represent only a tiny fraction of the full chroma information. For example, the sparsified chroma frames are optionally compressed before transmission.

According to a further embodiment, the method of video encoding comprises a step of generating a compressed video signal by forming an output bitstream comprising the compressed luminance frame and the at least one compressed chroma frame. For example, the output bitstream comprises an encoding of the compressed luminance frame and encodings of both compressed chroma frames for each frame of the video signal. For example, the encoding of the respective compressed frame comprises the full information of the compressed frame. It is also possible that the compressed frame is encoded as a frame difference. For example, the output bitstream comprises information on a difference between the current compressed frame and a previous compressed frame in the temporal sequence of frames.

According to a preferred embodiment, the method of video encoding comprises the steps of:
- receiving a video signal wherein a frame of the video signal comprises a luminance frame and at least one chroma frame,
- compressing the luminance frame by block-wise Hadamard transforming and truncating the luminance frame,
- compressing the at least one chroma frame by sparse sampling of the at least one chroma frame, wherein a binary mask is applied to the at least one chroma frame,
- generating a compressed video signal by forming an output bitstream comprising the compressed luminance frame and the at least one compressed chroma frame.

The methods of video encoding and video decoding specified herein are based on the idea to provide a video compression and decompression framework that is optimized for real-time streaming of the compressed video signal in bandwidth-constrained environments, such as edge devices, unmanned aerial vehicles, or satellite links, for example. Conventional video compression algorithms such as H.264 and H.265 rely on rigid block prediction, motion estimation and fixed chroma subsampling, which can limit their adaptability under dynamic bandwidth conditions and can introduce inefficiencies when deploying such algorithms on edge devices.

The methods of video encoding and video decoding specified herein combine transform coding for luminance compression, sparse chroma sampling and a chroma reconstruction using artificial neural networks to maximize perceptual quality, while minimizing the transmission bitrate in order to address limitations of conventional video compression algorithms. In particular, the AI-guided chroma reconstruction uses a pre-trained artificial neural network to reconstruct full-color frames from sparse luminance and/or chroma information. For example, the methods specified herein can achieve up to 96% bitrate reduction while preserving perceptual quality. Furthermore, the methods specified herein are deployable on edge hardware, e.g. on unmanned aerial vehicles, internet of things, and/or satellite streaming scenarios.

According to a further embodiment of the method of video encoding, the truncation is performed by applying a top-K operation to each block of the block-wise Hadamard transformed luminance frame. In particular, in each block only a number of K matrix elements with the largest magnitudes are retained, while all other matrix elements are set to zero. The number K of retained matrix elements can be different in different blocks. For example, in each block the number K of retained matrix elements can be individually adjusted. For example, the number K of retained matrix elements is at most 20, or at most 16, or at most 8. For example, the number K of retained matrix elements is at most 1/4 or at most 1/8 of the number of elements in a block of the block-wise Hadamard transformed luminance frame.

According to a further embodiment of the method of video encoding, each block of the truncated block-wise Hadamard transformed luminance frame is normalized, in particular for an N-bit encoding of matrix elements of the compressed luminance frame. In particular, each truncated and/or sparsified block of the block-wise Hadamard transformed luminance frame is globally normalized to a range [0, 2^{N}-1] for an N-bit encoding of matrix elements of the truncated block. For example, N=8 in the case of an 8-bit encoding of the sparsified block, in which case the luminance frame is globally normalized to the range [0, 255]. For example, matrix elements of the normalized block ${B}_{ij}^{norm}$ are obtained via ${B}_{ij}^{norm} = \left({2}^{N}-1\right) \left({B}_{ij}^{sparse}-m\right) / \left(M-m\right) ,$ where ${B}_{ij}^{sparse}$ denotes a matrix element of the truncated unnormalized block, M is value of a maximal matrix element of the unnormalized block and m is a value of a minimal matrix element of the unnormalized block.

According to a further embodiment of the method of video encoding, a compressed luminance frame is formed by reassembling the truncated blocks, in particular the truncated and normalized blocks, and encoding the reassembled truncated blocks as a portable network graphics, PNG, image.

According to a further embodiment of the method of video encoding, the at least one chroma frame is downsampled before applying the binary mask. In particular, the resolution of the at least one chroma frame is reduced before applying the binary mask. Such a reduction in chroma resolution exploits the lower visual sensitivity of the human eye to color detail, for example.

According to a further embodiment of the method of video encoding, the binary mask is a random mask, an edge-aware mask that depends on the luminance frame and/or a saliency-aware mask that depends on the luminance frame. For example, matrix elements of the random mask that take the value 1 are drawn with a probability p, whereas matrix elements that take the value 0 are drawn with a probability 1-p. For example, the edge-aware mask is generated by applying a Sobel filter or a Sobel operator to the luminance frame. For example, the saliency-aware mask is generated by constructing a saliency map from the luminance frame.

According to a further embodiment of the method of video encoding, the output bitstream further comprises a metadata block that is attached to each compressed frame. For example, the metadata block comprises a frame ID, i.e. a time stamp, the values M and m of the maximal and minimal matrix elements of the unnormalized blocks of the luminance frame, the coefficients K of the top-K operations applied to the blocks of the luminance frame, and/or a sparsity level of the luminance and/or chroma frames.

According to a further embodiment of the method of video encoding, the output bitstream further comprises the binary mask. In particular, the binary mask can be used when decoding, reconstructing and/or decompressing the video signal from the compressed video signal in the decoder. Alternatively, the binary mask can be reconstructed from the at least one chroma frame in the decoder.

According to a further embodiment, the method of video encoding further comprises a step of adjusting the truncation of the block-wise Hadamard transformed luminance frame, adjusting a sparsity level of the sparse sampling of the at least one chroma frame, and/or adjusting an encoding of a compressed frame by means of a reinforcement-learning agent.

In particular, the reinforcement-learning agent can dynamically adjust the truncation, the sparsity level and/or the encoding of the compressed frame during the encoding of the video signal.

For example, the reinforcement-learning agent adjusts the value of the coefficients K of the top-K operation. For example, the reinforcement-learning agent adjusts a ratio between a number of matrix elements of the binary mask that are 1 and a total number of matrix elements of the binary mask. For example, the reinforcement-learning agent adjusts a policy to encode the at least one frame in the output bitstream as an I-frame, a delta-frame, or a skip-frame. In particular, the I-frame comprises the full information of the compressed luminance and chroma frames. In particular, the delta-frame only comprises a frame difference, i.e. a difference between the current compressed luminance and/or chroma frames and previously compressed luminance and/or chroma frames, e.g. from a previous time step in the temporal sequence of frames. In particular, the skip-frame drops the current frame and comprises no information. For example, by encoding the at least one frame as a delta-frame or as a skip-frame, the bitrate of the output bitstream can be reduced.

For example, the reinforcement-learning agent acts as a policy decision maker for optimizing a bitrate efficiency of the transmitted, compressed video signal under dynamic network constraints. For example, the reinforcement-learning agent can dynamically adjust the bitrate of the output bitstream in response to properties of a network channel via which the output bitstream is transmitted to a decoder, such as a latency of the network channel and/or a packet loss rate of the network channel.

According to a further embodiment of the method of video encoding, the reinforcement-learning agent optimizes a reward function comprising a reward for increasing a perceptual quality of a frame of the video signal that is reconstructed from the output bitstream, a reward for reducing a bandwidth of the output bitstream, a reward for reducing a latency, and/or a reward for increasing a temporal smoothness of subsequent reconstructed frames.

For example, the reward for increasing a perceptual quality of a frame of the video signal that is reconstructed from the output bitstream is modelled using a structural similarity index measure, SSIM. In particular, the SSIM is computed between a decoded, reconstructed and/or decompressed frame from the output bitstream and the corresponding original, uncompressed frame from the input video signal. For example, the frame is reconstructed from the output bitstream using the method of video decoding specified below.

For example, the latency is a property of a network channel via which the output bitstream is transmitted from the video encoder to the video decoder. In particular, the latency corresponds to a time difference between a time where a compressed frame in the output bitstream is transmitted by the video encoder and a time where said compressed frame is received by the video decoder.

Further, a method of video decoding is specified. The method of video decoding can be used to decode and/or decompress a video signal that is compressed using the method of video encoding specified above. All features of the method of video encoding are also disclosed for the method of video decoding and vice versa.

According to an embodiment, the method of video decoding comprises a step of receiving an input bitstream of a compressed video signal wherein a frame of the compressed video signal comprises a compressed luminance frame and at least one compressed chroma frame. In particular, the input bitstream corresponds to the output bitstream of the method of video encoding specified above.

According to a further embodiment, the method of video decoding comprises a step of reconstructing a luminance frame by applying a block-wise inverse Hadamard transform to the compressed luminance frame. In particular, the Hadamard matrix for the block-wise inverse Hadamard transform corresponds to the Hadamard matrix of the method of video encoding specified above.

For example, the non-overlapping n×n blocks of the luminance frame are reconstructed and/or decompressed via the transformation ${B}_{ij}^{recon} = {H}^{T} \times {B}_{ij}^{sparse} \times H$*,* wherein *H* is the same Hadamard matrix that has been used for compressing the video signal using the method of video encoding specified above, ${B}_{ij}^{sparse}$ denotes an n×n block of the compressed luminance frame from the input bitstream, and ${B}_{ij}^{recon}$ denotes the reconstructed block of the luminance frame. In particular, all reconstructed blocks ${B}_{ij}^{recon}$ are stitched back together to a full-frame luminance image ${Y}_{t}^{recon} ∈ {ℝ}^{H \times W}$.

According to a further embodiment, the method of video decoding comprises a step of reconstructing at least one chroma frame by inference from the reconstructed luminance frame, in particular from a normalized reconstructed luminance frame, and the at least one compressed chroma frame using a pre-trained artificial neural network. In particular, the reconstructed luminance frame is normalized such that each matrix element takes a value in an interval between 0 and 1.

For example, the at least one compressed chroma frame is upsampled to the same resolution as the luminance frame before using it as an input for the pre-trained artificial neural network. In particular, the normalized reconstructed luminance frame and the upsampled compressed chroma frames are stacked an used as an input for the pre-trained artificial neural network. For example, the output of the pre-trained artificial neural network comprises or consists of the decompressed and/or reconstructed chroma frames U and V.

According to a further embodiment, the method of video decoding comprises a step of generating a frame of a decompressed video signal by merging the reconstructed luminance frame and the at least one reconstructed chroma frame. In particular, the decompressed and/or reconstructed chroma frames U and V are combined with the reconstructed luminance frame to form a YUV image of the decompressed and/or reconstructed video signal. The method can comprise an optional further step of converting the decompressed video signal from the YUV color model to the RGB color model.

According to a further embodiment of the method of video decoding, the pre-trained artificial neural network is trained using supervised machine learning. For example, the pre-trained artificial neural network comprises or consists of a convolutional neural network, a vision transformer and/or a diffusion decoder. For example, the pre-trained artificial neural network is trained by minimizing a loss function comprising a difference between the reconstructed chroma frame and a corresponding original, uncompressed chroma frame. In particular, the original, uncompressed chroma frame is compressed and decompressed using the methods specified above in order to obtain the reconstructed chroma frame.

According to a preferred embodiment, the method of video decoding comprises the steps of:
- receiving an input bitstream of a compressed video signal wherein a frame of the compressed video signal comprises a compressed luminance frame and at least one compressed chroma frame,
- reconstructing a luminance frame by applying a block-wise inverse Hadamard transform to the compressed luminance frame,
- reconstructing at least one chroma frame by inference from the reconstructed luminance frame and the at least one compressed chroma frame using a pre-trained artificial neural network, and
- generating a frame of a decompressed video signal by merging the reconstructed luminance frame and the at least one reconstructed chroma frame,
wherein
- the pre-trained artificial neural network is trained using supervised machine learning.

According to a further embodiment of the method of video decoding, reconstructing the luminance frame further comprises applying a filter to the block-wise inverse Hadamard transformed compressed luminance frame. For example, the filter is a 2D median filter. In particular, the filter reduces block artifacts in the reconstructed luminance frame that can be induced by the block-wise Hadamard transform and/or by the block-wise inverse Hadamard transform.

According to a further embodiment of the method of video decoding, the artificial neural network further uses a binary mask as an input, wherein the binary mask is used for compressing the at least one chroma frame. For example, the binary mask is transmitted as part of the input bitstream, or the binary mask is reconstructed from the at least one compressed chroma frame, e.g. in the video decoder. For example, zero-entries of the binary mask can be reconstructed from the matrix elements or pixel values in the compressed chroma frame that are zero or almost zero. For example, the binary mask can be reconstructed in the video decoder by thresholding the pixel intensity values in the upsampled compressed chroma frames. In particular, pixels with near-zero values are interpreted as non-sampled locations, thereby effectively approximating the original binary mask used in the video encoder.

According to a further embodiment of the method of video decoding, the artificial neural network comprises a convolutional neural network, a vision transformer and/or a diffusion decoder. For example, the vision transformer uses a token embedding wherein tokens are associated with different patches of the input frames, and further processes these tokens using a transformer architecture. In particular, the vision transformer can learn global attention maps that capture long-range dependencies, which can be beneficial when the compressed and/or sparsified chroma frame comprises patches that are spatially disjoint, and/or when non-local color patterns are present in the compressed chroma frame. For example, the diffusion decoder comprises or consists of a diffusion model for image generation.

According to a further embodiment of the method of video decoding, the artificial neural network comprises a temporal modeling module for reconstructing the at least one chroma frame. For example, the temporal modeling module comprises a recurrent component and/or an optical flow component. In particular, the recurrent component comprises a neural network with a feedback loop and/or a long short-term memory, LSTM, for example. The optical flow component tracks the motion of objects within the temporal sequence of frames, for example.

According to a further embodiment of the method of video decoding, the input bitstream corresponds to the output bitstream that is generated by the method of video encoding specified above.

Further, a system is specified herein. In particular, the system is configured for implementing and/or executing the method of video encoding and/or the method of video decoding as specified above. All features of the method of video encoding and the method of video decoding are also disclosed for the system, and vice versa.

According to an embodiment, the system comprises a video encoder comprising means for carrying out the method of video encoding specified above.

According to a further embodiment, the system comprises a video decoder comprising means for carrying out the method of video decoding specified above.

In particular, the video encoder, the video decoder, or the system can run on an edge device with limited computing power, such as a mobile device, an internet of things, IoT, device, or an unmanned aerial vehicle, for example. For example, the encoder and/or the encoder uses an embedded computing board, such as a Raspberry Pi or an Nvidia Jetson, for carrying out the methods of video encoding and/or decoding specified above. For example, the pre-trained artificial neural network is deployed in the video decoder using a quantized open neural network exchange, ONNX, format. For example, the reinforcement-learning agent is deployed in the video encoder using a quantized ONNX format.

According to a further embodiment of the system, the video encoder transmits the output bitstream to the video decoder via a communication network channel. For example, the communication network channel supports packet tracking, adaptive bitrate throttling, and/or latency logging. For example, the reinforcement-learning agent adaptively controls compression parameters of the video encoder based on real-time feedback from the communication network channel.

The methods disclosed herein are modular and support optional extensions, such as reinforcement-learning for a dynamic adjustment of the compression parameters, in particular the K coefficient of the top-K operation and the sparsity level p of the binary mask, based on bandwidth and motion cues. Further optional extensions are the addition of a temporal modeling module for motion-compensated reuse of chroma information using optical flow or learned recurrence, such as LSTM, a perceptual-aware training of the pre-trained artificial neural network via SSIM, LPIPS, or video multi-method assessment fusion, VMAF, to improve a reconstruction fidelity where human perception is most sensitive, as well as a quantized ONNX deployment for inference on constrained edge devices comprising an embedded computing board with limited computing power.

For example, the method of video encoding is a computer-implemented method and/or the method of video decoding is a computer-implemented method.

Further advantageous embodiments and further developments of the method of video encoding, the method of video decoding and the system become apparent from the following exemplary embodiments described in connection with the figures.
Figure 1 shows a schematic flow diagram of a method of video encoding according to an exemplary embodiment.
Figure 2 shows a schematic flow diagram of a method of video decoding according to an exemplary embodiment.
Figure 3 shows a schematic block diagram of a system according to an exemplary embodiment.
Figure 4 shows a schematic block diagram of an artificial neural network for inferring chroma frames used in a method of video decoding according to an exemplary embodiment.
Figure 5 shows a schematic flow diagram of training a reinforcement-learning agent for use in a method of video encoding according to an exemplary embodiment.
Figure 6 shows benchmarking data of the methods of video encoding and video decoding according to an exemplary embodiment.

Elements that are identical, similar, or have the same effect, are denoted by the same reference signs in the figures. The figures and the proportions of the elements shown in the figures are not to be regarded as true to scale. Rather, individual elements, may be shown exaggeratedly large for better representability and/or better understanding.

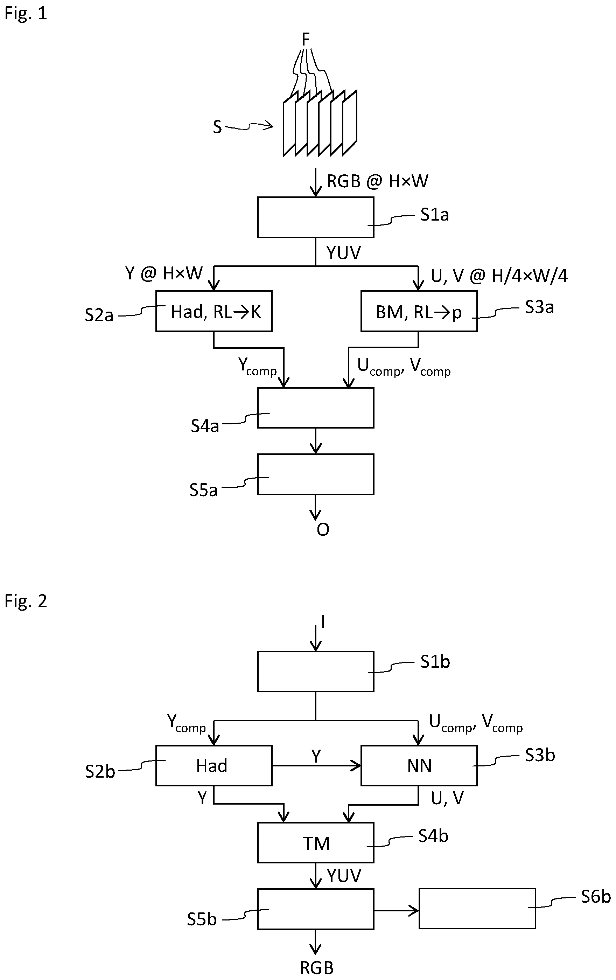

The method of video encoding according to the exemplary embodiment in Figure 1 comprises a first step S1a of preprocessing a video signal S. The video signal S is generated by a digital video camera, for example, and comprises a temporal sequence of frames F or images in an RGB color format. Each frame F has a resolution of H×W pixels, where H denotes a height of the frame F in pixels and W denotes a width of the frame F in pixels.

In the first step S1a, the video signal S is converted from the RGB color format to the YUV color format using a deterministic conversion function, such that each frame F of the video signal S is composed of a luminance frame Y and two chroma frames U and V. This conversion step can be omitted if the digital video camera, e.g. a hardware-accelerated digital video camera, already natively outputs the video signal in a YUV color format, such as a YUV 420, YUV422, or YUV444 color format, in which case the native luminance frame Y and the native chroma frames U, V can be directly further processed by the method of video encoding.

Further, in the first step S1a of the method of video encoding the chroma frames U, V are downsampled, such that their resolution is lowered. Each downsampled chroma frame U, V has a reduced resolution of h×w pixels, wherein h=H/n, w=W/n and n is a positive integer. For example, n=4 and the resolution of the chroma frames U, V is reduced by a factor of 16 compared to the resolution of the luminance frame Y. For example, downsampling is performed by computing mean pixel values of non-overlapping n×n blocks of the respective chroma frame U, V. This reduction in chroma resolution makes use of the lower visual sensitivity of the human eye to color detail. For example, after the preprocessing step the preprocessed video signal comprises a temporal sequence of frames F, wherein each frame F consists of a luminance frame Y with a resolution of e.g. 1280×720 pixels and two downsampled chroma frames U, V with a resolution of e.g. 320×180 pixels each.

In the second step S2a of the method of video encoding according to the exemplary embodiment of figure 1, the luminance frame Y of each frame F of the temporal sequence of frames F of the video signal S is compressed, such that a corresponding compressed luminance frame Y_{comp} is obtained. The compression of the luminance frame Y is performed by a block-wise Hadamard transformation Had and a subsequent truncation of the luminance frame Y.

First, the luminance frame Y is partitioned into non-overlapping n×n blocks *Bᵢⱼ* of pixel values, wherein n is a positive integer e.g. n=8. Preferably, n divides both the height H and the width W of the luminance frame Y without a remainder. Each block *Bᵢⱼ* can be represented by a matrix, wherein the value of each matrix element corresponds to the respective pixel value.

Second, each block *Bᵢⱼ* is transformed using a scaled orthogonal n×n Hadamard matrix Had, also denoted as *H,* via *B'ᵢⱼ = H* × *Bᵢⱼ × H^{T}*. All matrix elements of the Hadamard matrix *H* ∈ {+1,-1}^{*n*×*n*} take either the value +1 or -1. Further, the Hadamard matrix *H* satisfies *H × H^{T} = I,* wherein the superscript *T* denotes matrix transposition, × denotes matrix multiplication and *I* denotes the identity matrix.

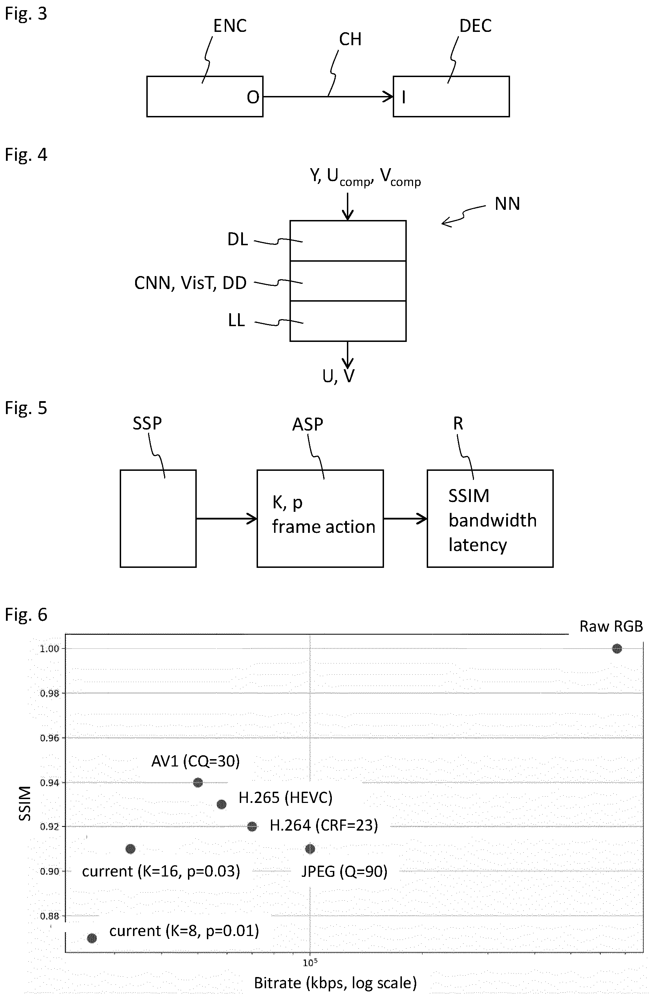

Third, each Hadamard transformed block *B'iⱼ* of the luminance frame Y is truncated by applying a top-K operation to each Hadamard transformed block *B'ᵢⱼ.* In the top-K operation, in each block *B'iⱼ* only a number of K of matrix elements with the largest magnitudes are retained, while all other matrix elements are set to zero. Consequently, the block-wise Hadamard transformed luminance frame Y is sparsified and thus compressed. The number K of retained matrix elements can differ between different blocks of the block-wise Hadamard transformed luminance frame Y. Optionally, the numbers K of retained matrix elements is dynamically adjusted using a reinforcement-learning agent RL to be described in connection with figure 5.

Fourth, each truncated Hadamard transformed block of the luminance frame Y is globally normalized, e.g. to the range [0, 255] for an 8-bit encoding of the compressed luminance frame. This normalization is performed e.g. via ${x}_{norm} = 255 \frac{x - m}{M - m} ,$ wherein *x* denotes the value of the matrix element, *xₙₒᵣₘ* is the value of the normalized matrix element, *M* denotes the value of a maximal matrix element within the truncated Hadamard transformed block, and *m* denotes the value of a minimal matrix element within the truncated Hadamard transformed block.

Lastly, the full normalized compressed luminance frame Y_{comp} is assembled from the normalized truncated Hadamard transformed blocks and encoded as an image, e.g. in the PNG format.

In the third step S3a of the method of video encoding according to the exemplary embodiment of figure 1, the two chroma frames U, V of each frame F of the temporal sequence of frames F of the video signal S are compressed, such that two corresponding compressed chroma frames U_{comp}, V_{comp} are obtained. The compressed chroma frames U_{comp}, V_{comp} are obtained by sparse sampling of the downsampled chroma frames U, V.

Sparse sampling is performed by element-wise multiplication of the matrices of the downsampled chroma frames U, V with a binary mask *BM* ∈ {0,1}*^{h×w}.* Matrix elements of the binary mask BM that are equal to 1 indicate sparse sampling locations, whereas no sampling occurs at locations of the chroma frame U, V where the matrix elements of the binary mask BM are equal to 0. A sparsity level p is associated with the binary mask BM. The sparsity level p corresponds to a ratio between a number of matrix elements of the binary mask BM that are equal to 1 and a total number of matrix elements of the binary mask BM. In other words, the level of compression of the chroma frames U, V is inversely proportional to the sparsity level p. Optionally, the sparsity level p is dynamically adjusted using a reinforcement-learning agent RL to be described in connection with figure 5.

The binary mask BM is either a random mask, an edge-aware mask or a saliency-aware mask, or a combination thereof. For the random mask, a probability that a matrix element of the binary mask BM is equal to 1 is given by the sparsity level p, i.e. *P*(*BMᵢⱼ =* 1) = *p.* The edge-aware mask is generated by truncating a Sobel transformation of the luminance frame *Y,* i.e. *BM =* (*Sobel*(*Y*) *> θ*), while the saliency-aware mask is constructed by truncating a saliency map of the luminance frame Y, i.e. *BM =* (*SaliencyMap*(*Y*) *> δ*), where *θ* and *δ* are threshold values used for determining which matrix elements of the binary mask BM are equal to 1.

Optionally, the compressed chroma frames U_{comp}, V_{comp} can be upsampled to the full resolution of the luminance frame Y using bicubic interpolation, for example. The upsampled compressed chroma frames U_{comp}, V_{comp} can be used as an auxiliary input for the pre-trained artificial neural network NN that is used for decoding and/or decompressing the compressed chroma frames U_{comp}, V_{comp} using the method of video decoding described in connection with the exemplary embodiment of figure 2.

In the fourth step S4a of the method of video encoding according to the exemplary embodiment of figure 1, a metadata block is attached to each compressed frame. The metadata block can be used to ensure a faithful reconstruction of the video signal S from the compressed frames. The metadata block comprises a frame identification, e.g. a time stamp, the minimal values *m* and the maximal values *M* of matrix elements of each block of the truncated, block-wise Hadamard transformed luminance frame Y_{comp}, the numbers K of retained matrix elements in the top-K operation of each block of the block-wise Hadamard transformed luminance frame Y_{comp}, and the sparsity level p of the binary mask BM.

In the fifth step S5a of the method of video encoding according to the exemplary embodiment of figure 1, each encoded compressed frame is serialized into structured packets that from an output bitstream O of the method. Each packet comprises the compressed information of one frame of the video signal S. Specifically, each packet comprises a header including the metadata block and a payload comprising the PNG-encoded compressed luminance frame Y_{comp}, the two compressed chroma frames U_{comp}, V_{comp}, and optionally the binary mask BM. For example, the metadata block is encoded in a JavaScript object notation, JSON, format.

The output bitstream O comprising the packets is then transmitted via a communication network channel CH from the video encoder ENC to a video decoder DEC for decompressing the compressed video signal and/or for reconstructing the original video signal S. For example, the packets are transmitted using a user datagram protocol, UDP. In particular, each packet begins with a length prefix and a frame identification to support a reassembly of the packets at the video decoder DEC in the correct order. The encoder ENC is thus able to compress and transmit high-resolution video frames at significantly lower bitrates while preserving a chrominance perception by using a machine-learned chrominance reconstruction at the video decoder DEC.

The method of video decoding according to the exemplary embodiment in Figure 2 comprises a first step S1b of packet reception and parsing. In this first step S1b, the output bitstream O of the video encoder ENC is received as an input bitstream I of the video decoder DEC. Upon receiving the output bitstream O via the communication network channel CH, the video decoder DEC performs a synchronization and frame reassembly of the compressed video signal using the frame identification in the metadata block of each packet.

In the second step S2b of the method of video decoding according to the exemplary embodiment of figure 2, the luminance frame Y corresponding to a frame F of the temporal sequence of frames F of the video signal S is reconstructed from the compressed luminance Y_{comp} frame in the input bitstream I.

First, the PNG encoded compressed luminance frame Y_{comp} is decoded and split into the same n×n blocks, e.g. 8×8 blocks, as in the video encoder ENC. Each block is then rescaled using the inverse of the global normalization step that is performed in step two S2a of the method of video encoding described in connection with the exemplary embodiment of figure 1. In particular, in the case of an 8-bit encoding, the rescaled matrix elements of the truncated Hadamard transformed blocks of the luminance frame Y_{comp} are obtained via ${x}_{rescaled} = \frac{{x}_{norm} \left(M-m\right)}{255} + m$, wherein x_{rescaled} denotes the rescaled matrix element, xₙₒᵣₘ denotes the normalized matrix element, and M and m are the values of the maximal and minimal matrix elements of the respective truncated Hadamard transformed block of the luminance frame Y_{comp}.

Second, an inverse Hadamard transform Had is performed on each rescaled block of the compressed luminance frame Y_{comp}. The reconstructed blocks of the luminance frame Y are obtained via ${B}_{ij}^{recon} = {H}^{T} \times {B}_{ij}^{sparse} \times H$*,* wherein the Hadamard matrix *H* is the same Hadamard matrix Had as in step two S2a of the method of video encoding described in connection with the exemplary embodiment of figure 1. Here, ${B}_{ij}^{recon}$ denotes the reconstructed block of the luminance frame, whereas ${B}_{ij}^{sparse}$ denotes the rescaled block of the compressed luminance frame Y_{comp}.

Finally, all reconstructed blocks of the luminance frame Y are reassembled into a full reconstructed and/or decompressed luminance frame Y. In order to reduce artifacts that can be introduced by the block-wise Hadamard transformation Had and/or by the block-wise inverse Hadamard transformation Had, a 2D median filter is further applied to the reconstructed luminance frame Y_{comp}.

In the third step S3b of the method of video decoding according to the exemplary embodiment of figure 2, the two chroma frames U, V corresponding to a frame F of the temporal sequence of frames F of the video signal S are reconstructed from the compressed chroma frames U_{comp}, V_{comp} in the input bitstream I. The chroma frames U, V are reconstructed by inference from the reconstructed luminance frame Y and the compressed chroma frames U_{comp}, V_{comp} using a pre-trained artificial neural network NN. In particular, the pre-trained neural network NN infers missing chroma information by leveraging structural information in the reconstructed luminance frame Y and the sparse chroma hints in the compressed chroma frames U_{comp}, V_{comp}. Optionally, the binary mask BM of the video encoder ENC is used as a further input of the pre-trained artificial neural network NN.

First, the reconstructed luminance frame Y is normalized such that its matrix elements take values in the interval [0, 1]. Further, the two compressed chroma frames U_{comp}, V_{comp} from the input bitstream I are upsampled to the full resolution of the reconstructed luminance frame Y and normalized such that their matrix elements take values in the interval [0, 1].

Second the reconstructed normalized luminance frame Y and the two upsampled normalized compressed chroma frames U_{comp}, V_{comp} are used as inputs of the pre-trained artificial neural network NN. The artificial neural network NN then outputs the two decompressed and/or reconstructed chroma frames U, V. In highly compressed settings, the pre-trained neural network NN can infer full-resolution chroma frames U, V from the reconstructed luminance frame Y alone, without using any compressed chroma information from the video encoder. In other words, the output bitstream of the method of video encoding my not contain any chroma frames or any chroma information at all, i.e. the sparsity level can be p=0. In this case, the pre-trained neural network NN effectively hallucinates color content from structure, texture, and learned priors, even in the absence of significant chroma input. Details on the artificial neural network NN and its training are described in connection with figure 4 below.

In an optional fourth step S4b of the method of video decoding according to the exemplary embodiment of figure 2, a temporal modeling module TM is used for improving the reconstruction of the chroma frames U, V from the compressed chroma frames U_{comp}, V_{comp}. The temporal modeling module TM uses a recurrent artificial neural network, such as an LSTM, and/or an optical flow component for reconstructing the chroma frames U, V. In particular, the temporal modeling module TM enables a motion-compensated reuse of reconstructed chroma frames U, V by means of an optical flow and/or by means of a learned recurrence. For example, the temporal modeling module TM additionally takes the reconstructed YUV image from a preceding time step in the temporal sequence of frames F as an input for inferring the chroma frames U, V, or implicitly stores information of preceding reconstructed chroma frames U, V for inferring the current chroma frames U, V. The temporal modeling module TM can be realized as a part of the pre-trained artificial neural network NN from step S3b of the method, or can be configured as a separate artificial neural network.

In a fifth step S5b of the method of video decoding according to the exemplary embodiment of figure 2, the reconstructed luminance frame Y and the two reconstructed chroma frames U, V are merged into a YUV image and optionally converted to the RGB color format and outputted as a frame of the reconstructed video signal.

In an optional sixth step S6b of the method of video decoding according to the exemplary embodiment of figure 2, metrics are logged and/or calculated for real-time monitoring and/or for training a reinforcement-learning agent RL of the video encoder ENC. The collected metrics comprises a latency corresponding to a time interval between a time step at which a packet of the output bitstream O of the video encoder ENC is fully assembled, i.e. a time stamp of the packet of the output bitstream O, and a time step at which the corresponding frame F of the video signal S is fully reconstructed by the method of video decoding. In particular, the latency includes a latency of the communication network channel CH via which the packet is transmitted from the video encoder ENC to the video decoder DEC.

Further, the collected metrics can comprise an instantaneous frame rate, i.e. an inverse of the latency, perceptual similarity scores between the reconstructed frame and the original frame of the video signal, a total size of the original frame, a total size of all packets corresponding to this frame, and/or a compression ratio, i.e. a ratio between the total size of the original frame and the size of the corresponding compressed frame.

The system according to the exemplary embodiment of Figure 3 comprises a video encoder ENC and a video decoder DEC. The video encoder ENC comprises means for compressing a video signal S according to the method of video encoding described in connection with figure 1. The video decoder DEC comprises means for decompressing and/or reconstructing the video signal S from the output bitstream O of the video encoder ENC according to the method of video decoding described in connection with figure 2. Further the system can comprise a communication network channel CH via which the output bitstream O of the video encoder ENC is transmitted to the video decoder DEC, where it is used as the input bitstream I. The communication network channel CH supports packet tracking, adaptive bitrate throttling and/or latency logging. Alternatively, the system can comprise only the video encoder ENC, or only the video decoder DEC.

The video decoder DEC and/or the video encoder ENC comprises a respective embedded computing board. The embedded computing board comprises a central processing unit, CPU, and a memory for performing the respective method. Optionally, the video decoder and/or the video encoder can comprise a graphics processing unit, GPU, for accelerating the respective method, although this is not necessary.

The artificial neural network NN shown in Figure 4 for inferring chroma frames U, V as used in the method of video decoding according to the exemplary embodiment described in connection with figure 2 comprises a dataset layer DL for representing the input. The input of the artificial neural network NN comprises the full resolution reconstructed luminance frame Y that is normalized to the interval [0, 1] and the two compressed chroma frames U_{comp}, V_{comp} that are sparsified using the binary mask BM and that are subsequently upsampled to the full resolution of the reconstructed luminance frame Y for alignment with the luminance frame Y. Further, the corresponding full, uncompressed chroma frames U, V of training data is used for supervised learning. As training data opensource video signal data can be used, for example. An idea of training the artificial neural network NN is to simulate a real-world compression, wherein only partial chroma information is transmitted to the decoder DEC and the artificial neural network NN has to infer the missing chroma information based on a spatial and semantic context.

The artificial neural network NN further comprises a convolutional neural network, CNN, encoder-decoder pipeline, a vision transformer VisT, and/or a diffusion decoder DD. The CNN encoder-decoder pipeline, such as an autodecoder, comprises an encoder that can extract mid-level spatial features from the input frames Y, U_{comp}, V_{comp}. Further, the CNN encoder-decoder pipeline comprises a middle block that adds depth to the artificial neural network NN while maintaining the resolution, and a decoder that upsamples and reconstructs the two chroma frames U, V at full resolution. Potential limitations of the CNN encoder-decoder pipeline are a receptive field that may be only local, as well as potential shortcomings with a non-local color inference, e.g. when the chroma information in the compressed chroma frame U_{comp}, V_{comp} is at a different location far away from features in the reconstructed luminance frame Y.

The vision transformer VisT as well as the diffusion decoder DD can learn global attention maps, thereby capturing long-range dependencies. This can be beneficial if sparse patches in the sparsified chroma frames U_{comp}, V_{comp} are spatially disjoint and/or if non-local color patterns are present in the chroma frames U_{comp}, V_{comp}. The vision transformer VisT as well as the diffusion decoder DD comprises a patch embedding component wherein the input, i.e. the reconstructed luminance frame Y and the compressed chroma frames U_{comp}, V_{comp} are split into patches, e.g. with a size of 16×16 pixels. Each patch is then flattened and projected to an embedding vector. Further the vision transformer VisT as well as the diffusion decoder DD comprises a positional encoding component that adds spatial location information to the patches.

The vision transformer VisT further comprises a transformer encoder and a multilayer perceptron, MLP, decoder. The transformer encoder includes multi-head self-attention layers that allow the artificial neural network to globally cross-reference sparse patches in the chroma frames with surrounding features in the reconstructed luminance frame.

The MLP decoder outputs reconstructed chroma information per patch, that is reassembled into full-resolution reconstructed chroma frames.

The vision transformer VisT and the diffusion decoder DD advantageously allow for global reasoning, wherein the reconstruction of chroma information is improved in regions of the frame where no chroma information hint is available nearby. Further, the vision transformer VisT advantageously has an improved semantic awareness and thus allows to learn a high-level structure of the chroma frames U_{comp}, V_{comp}.

Lastly, the artificial neural network NN comprises a loss layer LL. The loss layer LL minimizes a mean squared error, MSE, of per-pixel chroma values, for example. Alternatively or in addition, the loss layer LL can optimize a structural similarity index measure, SSIM, and/or a learned perceptual image patch similarity, LPIPS, between the reconstructed chroma frames U, V and the corresponding original full chroma frames U, V. For example, optimizing the SSIM encourages a structure-preserving output, while LPIPS compares features from a pre-trained visual geometry group, VGG, network to increase a perceptual fidelity. For example, the loss layer LL can minimize a weighted composite loss that is parametrized as ${L}_{total} = {λ}_{1} {L}_{MSE} + {λ}_{2} \left(1-SSIM\right) + {λ}_{3} LPIPS ,$ Wherein *Lₜₒₜₐₗ* denotes the total loss, *L_{MSE}* denotes the mean squared error loss per pixel, *SSIM* is the structural similarity index measure, *LPIPS* denotes the learned perceptual image patch similarity score, and λ₁, λ₂ and λ₃ are weight factors.

The training loop trains the artificial neural network NN for reconstructing full-resolution chroma frames U, V from sparsified, compressed chroma frames U_{comp}, V_{comp} and from the corresponding full-resolution reconstructed luminance frame Y. The artificial neural network NN learns to hallucinate missing color information by leveraging the spatial structure, texture and contextual cues embedded in the reconstructed luminance frame **Y.**

The trained artificial neural network NN is stored and/or saved for deployment in the video decoder DEC. For example, the trained artificial neural network NN is stored as a Torch script or using the ONNX format and quantized for deployment on edge devices. In particular, the trained artificial neural network NN is used directly in the video decoder DEC, rather than in a cloud environment, for example.

The flow diagram in Figure 5 schematically shows the training of a reinforcement-learning agent RL for use in a method of video encoding according to an exemplary embodiment described in connection with figure 1. The reinforcement-learning agent RL is embedded within the video encoder ENC and acts as a policy decision-maker for optimizing a bitrate efficiency of the transmitted output bitstream O under dynamic network constraints of the network channel CH via which the output bitstream O is transmitted to the video decoder DEC.

The reinforcement-learning agent RL learns to adjust the truncation of the block-wise Hadamard transformed luminance frame, e.g. it adjusts the numbers K of retained matrix elements in the respective blocks. Further, the reinforcement-learning agent learns to adjust the sparsity level p of the binary mask BM for sparse chroma sampling, as well as a policy to encode the compressed frame as an I-frame, a delta-frame or a skip-frame. The I-frame comprises the full information of the compressed luminance Y_{comp} and chroma frames U_{comp}, V_{comp}, whereas the delta-frame only comprises a frame difference between the current compressed luminance and/or chroma frames Y_{comp}, U_{comp}, V_{comp} and previously compressed luminance and/or chroma frames Y_{comp}, U_{comp}, V_{comp}. The skip-frame comprises no information, i.e. the current compressed frame is dropped, e.g. if two subsequent frames F in the temporal sequence of frames F of the video signal S are identical or almost identical.

The reinforcement-learning agent RL optimizes a reward function R that depends on a perceptual quality of the reconstructed frame F, a latency, and/or a bandwidth consumption of the output bitstream **O.**

The reinforcement-learning problem can be defined as a Markov decision process, MDP, comprising a state space SSP, an action space ASP, a reward function R and a transition dynamics. The state space SSP captures encoder ENC and/or network channel CH statistics at a given time.

A state vector of the state space SSP comprises information on the average used bandwidth of the output bitstream O over the last N seconds, a latency information, information about inter-frame motion, information about a fraction of an occupied transmit buffer of the video encoder ENC, information about a size of the previous compressed frame, quality information of the previously reconstructed frame, information on the truncation of the block-wise Hadamard transformed luminance frame Y from the previous time step, and/or information on the sparsity level p of the binary mask BM used in the previous time step. The latency information comprises or consists of a one-way delay time of a packet that is sent from the video encoder ENC to the video decoder DEC via the communication network channel CH, or a round-trip time of information sent from the encoder ENC to the decoder DEC and metrics sent back from the decoder DEC to the encoder ENC. The information about inter-frame motion comprises information about the motion of objects in the frame F that is estimated e.g. via an optical flow or via a difference between subsequent frames F. The quality information comprises or consists of SSIM information and/or a peak signal-to-noise ratio, PSNR, information from the reconstruction of the previous frame F. The information on the truncation comprises or consists of the number K of retained matrix elements in each Hadamard transformed block of the luminance frame Y.

The reinforcement-learning agent RL selects a composite action from a multi-discrete action space ASP at each time step, e.g. before or after compressing a frame of the video signal S. The action comprises selecting the numbers K of retained matrix elements in the top-K operation applied to Hadamard transformed blocks of the luminance frame Y. For example, the number K of retained matrix elements is selected from the values K = 8, 16, 24, 32 or 48. A higher K value increases a quality of the reconstructed frame but also increases a bandwidth of the output bitstream O. Further, the action comprises selecting the sparsity level p of the binary mask BM used for sparsifying the chroma frames U, V. For example, the sparsity level p is selected from the values p = 0.01, 0.03, 0.05, 0.08 and 0.1. Lastly, the action comprises selecting an encoding of the current compressed frame as I-frame, delta-frame or skip-frame.

The reward function R is constructed to balance requirements on a quality of the reconstructed video signal and on an efficiency, i.e. on the bandwidth, of the output bitstream. The reward function can be parametrized as a weighted sum of different measures, such as ${R}_{t} = α ⋅ {SSIM}_{t} - β ⋅ {BW}_{t} - γ ⋅ {latency}_{t} - δ ⋅ {jerk}_{t} ,$ wherein *Rₜ* denotes the reward function at time t, *SSIMₜ* denotes the structural similarity index measure at time t, *BWₜ* the consumed bandwidth of the output bitstream at time t, *latencyₜ* denotes the latency at time t, *jerkₜ* denotes a temporal smoothness penalty, such as a difference in SSIM or the bitrate at subsequent time steps, and α, β, γ, and δ are tunable weight coefficients. For example, α is between 0.5 and 1.0 and rewards perceptual quality, β is between 0.1 and 0.5 and penalizes excess bandwidth use, γ is between 0.1 and 0.3 and penalizes a delay, whereas *δ* is between 0.1 and 0.2 an penalizes flicker or discontinuities in the reconstructed video signal.

A lightweight deep reinforcement-learning policy can be used for real-time inference of the reinforcement-learning agent RL. The state input of reinforcement-learning agent RL corresponds to a vector from the state space, whereas the output of the reinforcement-learning agent RL are discrete logits for each component of the action. The reinforcement-learning agent RL comprises a 2-layer multilayer perceptron policy head, for example. The reinforcement-learning agent RL has an inference time of about 1 ms, which is suitable for use in an embedded computing board. Optionally, the reinforcement-learning agent RL can be pre-trained offline using recorded traces, e.g. by means of a proximal policy optimization, PPO, algorithm or an advantage actor-critic, A2C, algorithm. A fine-tuning of the reinforcement-learning agent RL can then be performed online, i.e. during intended operation of the video encoder ENC.

The execution cycle of the reinforcement-learning agent RL comprises the following steps. First, the state is observed from the encoder ENC and from logs of the communication network channel CH. Second, an action from the action space ASP is selected. Third, the action is applied and includes setting the number K of retained matrix elements for truncating the luminance frame Y, setting the sparsity level p of the binary mask BM, as well as choosing the encoding of the frame as I-frame, delta-frame or skip-frame. Fourth, frame compressing is performed using the selected truncation and/or sparsification parameters. Fifth, feedback is received, such as SSIM metrics, latency metrics and/or metrics of the bandwidth of the output bitstream O. Sixth, the reward R is calculated. Lastly, the state a time t, the action at time t, the reward at time t and the state at the subsequent time step are stored for training the reinforcement-learning agent RL.

The reinforcement-learning agent RL can learn online during intended operation of the video encoder ENC by a gradual policy improvement using reward feedback. Alternatively or in addition, the reinforcement-learning agent RL can learn offline using simulated video signals S with varying bandwidth and or latency traces. The reinforcement-learning agent RL can also be updated in batches depending on the stability and the deployment platform. Moreover, the reinforcement-learning agent RL can learn using supervised pre-training, wherein the reinforcement-learning agent RL mimics expert decisions or fixed rules before switching to online reinforcement-learning. The training datasets preferably comprise diverse motion levels, diverse scene types, and/or diverse network profiles, e.g. wireless network profiles and wired network profiles.

The reinforcement-learning agent RL is embedded as a wrapper around the video encoder ENC, wherein for a given input frame F the reinforcement-learning agent RL selects the action from the action space ASP, after which the video encoder ENC compresses the video signal using the compression parameters K, p specified by the action of the reinforcement-learning agent RL. The output bitstream O of the video encoder ENC comprising the compressed video signal is then transmitted in packets via the communication network channel CH to the video decoder DEC. A logger collects information on the SSIM, the bandwidth of the output bitstream O and the latency of the communication network channel CH and the video decoder DEC. This collected information is then used to compute the reward function R and to train the reinforcement-learning agent RL.

Figure 6 shows benchmarking results of compressing the video signal S using the method of video encoding according to the exemplary embodiment described in connection with figure 1 and subsequently decompressing the compressed video signal S using the method of video decoding described in connection with figure 2 in comparison with corresponding metrics of conventional video encoding and decoding methods.

The following table shows these benchmarking results for different methods in comparison. The metrics used are SSIM, LPIPS, the compression ratio and the bitrate of the output bitstream O of the video encoder ENC that is transmitted to the video decoder DEC. The SSIM metric takes values from 0 to 1, wherein higher SSIM values indicate a better quality of the decompressed video signal. The LPIPS metric takes values from 0 to 1, wherein lower LPIPS values indicate a better quality of the decompressed video signal.

| Codec / Method | SSIM | LPIPS | Compression ratio (%) | Bitrate (kbps) |
|---|---|---|---|---|
| raw RGB | 1.0 | 0.0 | 0 | 665000 |
| JPEG (Q=90) | 0.91 | 0.085 | 85 | 100000 |
| H.264 (CRF=23) | 0.92 | 0.072 | 89 | 70000 |
| H.265 / HEVC | 0.93 | 0.065 | 91 | 58000 |
| AV1 (CQ=30) | 0.94 | 0.054 | 93 | 50000 |
| current (K=16, p=0.03) | 0.91 | 0.061 | 95 | 33000 |
| current (K=8, p=0.01) | 0.87 | 0.085 | 96 | 26000 |

In the above table, "raw RGB" shows performance metrics of transmitting an uncompressed video signal, whereas "JPEG" uses a Joint Photographic Experts Group, JPEG, compression of frames of the video signal at a quality of Q=90. "H.264" corresponds to video compression and decompression according to the advanced video coding, AVC, protocol at a constant rate factor, CRF, of 23, whereas "H.265 / HEVC" corresponds to video compression and decompression according to the high efficiency video coding, HVEC, protocol. "AV1" uses the open source AOMedia Video 1, AV1, video coding format for compression and decompression at a quality control, QC, parameter of 30. Finally, "current" corresponds to compressing the video signal using the method of video encoding according to the exemplary embodiment described in connection with figure 1 and subsequently decompressing the compressed video signal using the method of video decoding described in connection with figure 2, wherein different values of K of the top-K operation and different values of the sparsity level p of the binary mask BM are used.

In figure 6, the bitrate vs. the SSIM metric is shown for the methods listed in the above table. The benchmarking results in the above table and in figure 6 show that the methods of video encoding and video decoding according to the exemplary embodiments described in connection with figures 1 and 2 for compression parameters K=16 and p=0.03 give rise to a comparable quality of the decompressed video signal as the H.264, H.265 and JPEG video coding formats, while-unexpectedly - significantly reducing the bitrate of the transmitted output bitstream O. Compared to JPEG, H.264 and H.265, the methods disclosed herein allow for a reduction of the bitrate by 67%, 53% and 43%, respectively. Compared to the AV1 video coding format, the current method at K=16 and p=0.03 has a slightly reduced quality of the decompressed video, while reducing the bitrate of the output bitstream by a substantial 34%. Further increasing the compression ratio to 96% using the current method with compression parameters K=8 and p=0.01 only slightly decreases the quality of the decompressed video signal, while further significantly reducing the bitrate of the output bitstream by 74%, 63%, 55% and 48% compared to the JPEG, H.264, H.265 and AV1, video coding formats, respectively.

The invention is not restricted to the exemplary embodiments by the description on the basis of said exemplary embodiments. Rather, the invention encompasses any new feature and also any combination of features, which in particular comprises any combination of features in the patent claims and any combination of features in the exemplary embodiments, even if this feature or this combination itself is not explicitly specified in the patent claims or exemplary embodiments.

### Reference signs

- ASP: action space
- BM: binary mask
- CH: communication network channel
- CNN: convolutional neural network
- DD: diffusion decoder
- DL: dataset layer
- DEC: video decoder
- ENC: video encoder
- F: frame
- H: height of the frame
- Had: Hadamard matrix
- I: input bitstream
- K: number of retained matrix elements in top-K
- LL: loss layer
- NN: pre-trained artificial neural network
- O: output bitstream
- p: sparsity level
- R: reward function
- RL: reinforcement-learning agent
- S: video signal
- SSP: state space
- TM: temporal modeling module
- U, V: chroma frame
- U_{comp}, V_{comp}: compressed chroma frame
- VisT: vision transformer
- DD: diffusion decoder
- W: width of the frame
- Y: luminance frame
- Y_{comp}: compressed luminance frame

## Claims

1. A method of video encoding, comprising:
- receiving a video signal (S) wherein a frame (F) of the video signal (S) comprises a luminance frame (Y) and at least one chroma frame (U, V),
- compressing the luminance frame (Y) by block-wise Hadamard (Had) transforming and truncating the luminance frame (Y),
- compressing the at least one chroma frame (U, V) by sparse sampling of the at least one chroma frame (U, V), wherein a binary mask (BM) is applied to the at least one chroma frame (U, V),
- generating a compressed video signal by forming an output bitstream (O) comprising the compressed luminance frame (Y_{comp}) and the at least one compressed chroma frame (U_{comp}, V_{comp}).

2. The method according to claim 1, wherein the truncation is performed by applying a top-K operation to each block of the block-wise Hadamard (Had) transformed luminance frame (Y).

3. The method according to any of claims 1 or 2, wherein the at least one chroma frame (U, V) is downsampled before applying the binary mask (BM).

4. The method according to any of claims 1 to 3, wherein the binary mask (BM) is a random mask, an edge-aware mask that depends on the luminance frame (Y) and/or a saliency-aware mask that depends on the luminance frame (Y).

5. The method according to any of claims 1 to 4, wherein the output bitstream (O) further comprises the binary mask (BM).

6. The method according to any of claims 1 to 5, further comprising a step of adjusting the truncation of the block-wise Hadamard (Had) transformed luminance frame (Y), adjusting a sparsity level (p) of the sparse sampling of the at least one chroma frame (U, V), and/or adjusting an encoding of a compressed frame, by means of a reinforcement-learning agent (RL).

7. The method according to claim 6, wherein the reinforcement-learning agent (RL) optimizes a reward function (R) comprising a reward for increasing a perceptual quality of a frame (F) of the video signal (S) that is reconstructed from the output bitstream (O), a reward for reducing a bandwidth of the output bitstream (O), a reward for reducing a latency, and/or a reward for increasing a temporal smoothness of subsequent reconstructed frames.

8. The method according to claim 7, wherein the frame (F) of the video signal (S) is reconstructed from the output bitstream (O) using the method of any of claims 9 to 13.

9. A method of video decoding, comprising:
- receiving an input bitstream (I) of a compressed video signal wherein a frame of the compressed video signal comprises a compressed luminance frame (Y_{comp}) and at least one compressed chroma frame (U_{comp}, V_{comp}),
- reconstructing a luminance frame (Y) by applying a block-wise inverse Hadamard (Had) transform to the compressed luminance frame (Y_{comp}),
- reconstructing at least one chroma frame (U, V) by inference from the reconstructed luminance frame (Y) and the at least one compressed chroma frame (U_{comp}, V_{comp}) using a pre-trained artificial neural network (NN), and
- generating a frame of a decompressed video signal by merging the reconstructed luminance frame (Y) and the at least one reconstructed chroma frame (U, V),
wherein
- the pre-trained artificial neural network (NN) is trained using supervised machine learning.

10. The method according to claim 9, wherein reconstructing the luminance frame (Y) further comprises applying a filter to the block-wise inverse Hadamard (Had) transformed compressed luminance frame (Y_{comp}) .

11. The method according to any of claims 9 or 10, wherein the artificial neural network (NN) further uses a binary mask (BM) as an input, wherein the binary mask (BM) is used for compressing the at least one chroma frame (U, V).

12. The method according to any of claims 9 to 11, wherein the artificial neural network (NN) comprises a temporal modeling module (TM) for reconstructing the at least one chroma frame (U, V).

13. The method according to any of claims 9 to 12, wherein the input bitstream (I) corresponds to an output bitstream (O) that is generated by the method according to any of claims 1 to 8.

14. A system comprising:
- a video encoder (ENC) comprising means for carrying out the method of any of claims 1 to 8, and/or
- a video decoder (DEC) comprising means for carrying out the method of any of claims 9 to 13.

15. The system according to claim 14, wherein the video encoder (ENC) transmits the output bitstream (O) to the video decoder (DEC) via a communication network channel (CH).
